(19) Europäisches Patentamt
European Patent Office
Office européen des brevets

(11) **EP 2 689 668 A1**

(12) **EUROPEAN PATENT APPLICATION**

(43) Date of publication:
**29.01.2014 Bulletin 2014/05**

(51) Int Cl.:
*A23F 5/36* [(2006.01)]     *A23F 5/34* [(2006.01)]

(21) Application number: **13186814.3**

(22) Date of filing: **10.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 US 976229 P**

(62) Document number(s) of the earlier application(s) in accordance with Art. 76 EPC:
**08803938.3 / 2 194 795**

(71) Applicant: **Nestec S.A.**
**1800 Vevey (CH)**

(72) Inventors:
  • **Kessler, Ulrich**
    **1073 Savigny (CH)**
  • **Duffey, Jean-Louis**
    **74500 Lugrin (FR)**
  • **Dreyer, Marc Georges**
    **1822 Chernex (CH)**

  • **Kauter, Michael Desmond**
    **Black Mountain, Queensland 4563 (AU)**
  • **Sudharsan, Mathalai Balan**
    **1004 Lausanne (CH)**
  • **Chanvrier, Hélène Michèle Jeanne**
    **1350 Orbe (CH)**
  • **Wehrspann, Olaf**
    **1350 Orbe (CH)**
  • **Fu, Xiaoping**
    **Dublin, OH 43016 (US)**

(74) Representative: **Lomholt, Stig Bredsted**
**Nestec S.A.**
**CT-IAM**
**Avenue Nestlé 55**
**1800 Vevey (CH)**

Remarks:
This application was filed on 01-10-2013 as a divisional application to the application mentioned under INID code 62.

(54) **Instant drink powder**

(57) The present invention relates to an instant drink powder, preferably an instant coffee powder, which upon reconstitution provides improved foaming. The powder particles have a porosity of at least 55%. The present invention also relates to the use of such a powder, as well as to the method of manufacturing said powder.

FIG. 4

EP 2 689 668 A1

# Description

## Field of the invention

The present invention relates to an instant drink powder, preferably an instant coffee powder, which upon reconstitution provides improved foaming. The present invention also relates to the use of such a powder, as well as to the method of manufacturing said powder.

## Background of the invention

Numerous methods have been described to improve the foam formation on instant beverages. For instance WO 97/33482 relates to a soluble coffee beverage powder which comprises a gas containing soluble whitener powder and a soluble coffee powder. EP 0 154 192 B2 and GB 2 154 422 A describe a way to obtain a foaming beverage by adding water to a pulverant material having a protein/lactose weight ratio of 1/3 to 1/5 and comprising stabilising salts.

Foaming creamers are also disclosed in US 4,438,147. A method for increasing the foaming capacity of spraydried powders is given in EP 1 627 572 whereby amorphous particles of a powdered soluble composition having internal voids are filled with a gas. Another way to fill internal voids with pressurised gas in order to give a foaming soluble coffee powder is given in EP 1 627 568. Soluble coffee beverage having a foamed upper surface is described in US 6,964,789.

Most of the prior art deals with beverages having a creamer component, which upon reconstitution provides the froth and foam desired. However, fewer citations relate to instant beverages which do not comprise a creamer component and which are yet foamy on the upper surface. Such a beverage composition is described in US 5,882,717 and EP 0 839 457 for example. The reconstituted coffee beverage is said to have an improved in-cup foam which simulates the foam formed on espresso made from roasted and ground espresso coffee (called "crema").

There is thus still room for improvement in the field of foamy instant beverages.

## Object of the present invention

It is therefore an object of the present invention to improve the stability and amount of foam produced when reconstituting an instant beverage powder.

## Summary of the invention

Accordingly, this need is solved by the features of the independent claims. The dependent claims further develop the central idea of the invention.

Thus, in a first aspect, the present invention relates to an instant drink powder comprising porous powder particles **characterised in that** the powder particles have a porosity of at least 65%, preferably at least 70%.

The use of a powder according to any of claims 1 to 5, for the preparation of an instant drink also forms part of the present invention.

A third aspect of the invention pertains to a method for the manufacture of an instant drink powder comprising the steps of:

> a. Subjecting a instant drink extract to a pressure of 50 to 400 bar, preferably of 150 to 400 bar
> b. Adding gas to the pressurised extract,
> c. Spraying and drying the extract to form an instant drink powder,

and to a product obtainable by said method.

## Figures

The present invention is further described hereinafter with reference to some of its embodiments shown in the accompanying drawings in which:

- Figure 1 illustrates the particle porosity of products according to the invention (PI I and PI II) and the particle porosity of prior art products (PA I, PA II and PA III),

- Figure 2 is a diagram showing average pore diameter ($D_{50}$) of the particle void space distribution and the span of same distribution (($D_{90}$ - $D_{10}$) / $D_{50}$ )for products of the invention (PI I, PI II) and for prior art products (PA I, PA II, PA III),

- Figure 3 depicts the amount of crema as a function of porosity for products of the invention (PI I, PI II) and for prior art products (PA I, PA II, and PA III),

- Figure 4 is a sketch depicting a method for producing the powder of the invention,

- Figure 5 is a drawing of a device for measuring the amount of crema formed upon reconstitution of a beverage powder. The inner diameter of the reconstitution vessel is 71 mm, the inner height 77.5 mm, the height of the lid is 65 mm, and

- Figure 6 is two cross-sections of a layer of typical coffee particles of the invention at two different magnifications, obtained by X-ray tomography. The scale bars represents 500 microns (upper image) and 250 microns (lower image) respectively.

## Detailed description of the invention

The present invention relates to instant drink compositions with improved crema. By "crema" is meant the fine foam formed on the surface of a liquid. Crema is for example observed upon extraction of roasted and ground coffee under high pressure with special coffee machines.

In the following description, reference is made to instant coffee compositions as a preferred embodiment. The instant drink composition may however also be cocoa, chocolate, tea, soup, fruity drinks etc.

By instant drink composition is meant a dried, soluble powder composition which can be reconstituted by addition of a liquid, e.g. hot or cold water, milk, juice etc.

The instant coffee powder of the invention comprises porous powder particles which are **characterised in that** the powder particles have a porosity of at least 55%, preferably at least 65%, even more preferably at least 70%. In a preferred embodiment, the powder particle porosity is between 65 and 85%, more preferably between 65 and 80%, even more preferably between 70 and 80%, most preferably between 70 and 75%.

Porosity can be measured by means known in the art. For instance, the porosity can be measured by the following equation:

$$\frac{Vp - Vcm}{Vp} \times 100$$

wherein Vp is the volume of the particle and Vcm is the volume of the coffee matrix in the particle. These values may be determined by standard measurements such as mercury porosimetry or also by x-ray tomographyic technique.

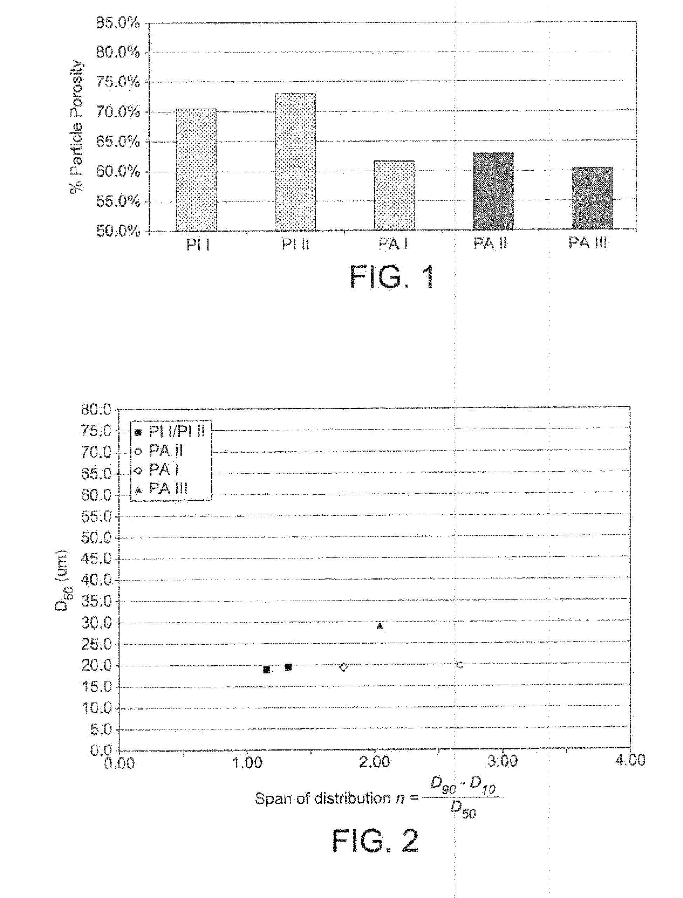

The powder of the invention is therefore characterised by its high porosity in comparison with known products (see Fig. 1). Not only does the high porosity contribute to the good solubility of the powder of the invention, but it also allows an increased amount of crema to be formed upon reconstitution of the powder.

The pores of the present powder may have an average diameter $D_{50}$ less than 80 microns, preferably less than 60 microns, more preferably less than 40 microns, most preferably less than 25 microns. The void space distribution in the particles is measured by X-ray tomography. The pore size characterising the present powder is larger than that described in US 5,882,717. Surprisingly, however, it has been found that larger pore sizes still provide a fine and generous crema in the final reconstituted product.

The powder of the invention may also be characterised by the span of the void space distribution in the particle, which is obtained from X-ray tomography. The span of the distribution is calculated by the following equation:

$$\text{Span} = \frac{D_{90} - D_{10}}{D_{50}}$$

Wherein $D_{90}$, $D_{10}$ and $D_{50}$ represents the diameters where 90%, 10% and 50%, respectively, of the particle volume is in particles with a size below this value. Thus, a distribution span factor (n) of less than 4, preferably less than 3, more preferably less than 2, most preferably less than 1.5 characterises the pores of the powder according to the invention. The lower the span factor (n), the more uniform and sharp is the size distribution. Thus, the products of the invention are characterised by a sharper size distribution than the prior art products (cf. Fig. 2).

The particle size of the powder particles may e.g. be characterised by the median particle diameter (volume distribution), $X_{50}$. $X_{50}$ is preferably in the range between 50 and 500 microns, such as e.g. between 100 and 300 microns, or between 150 and 250 microns.

The advantages conferred by these characteristics upon the powders of the invention include increased crema and stability of the crema upon reconstitution of the powder in a liquid.

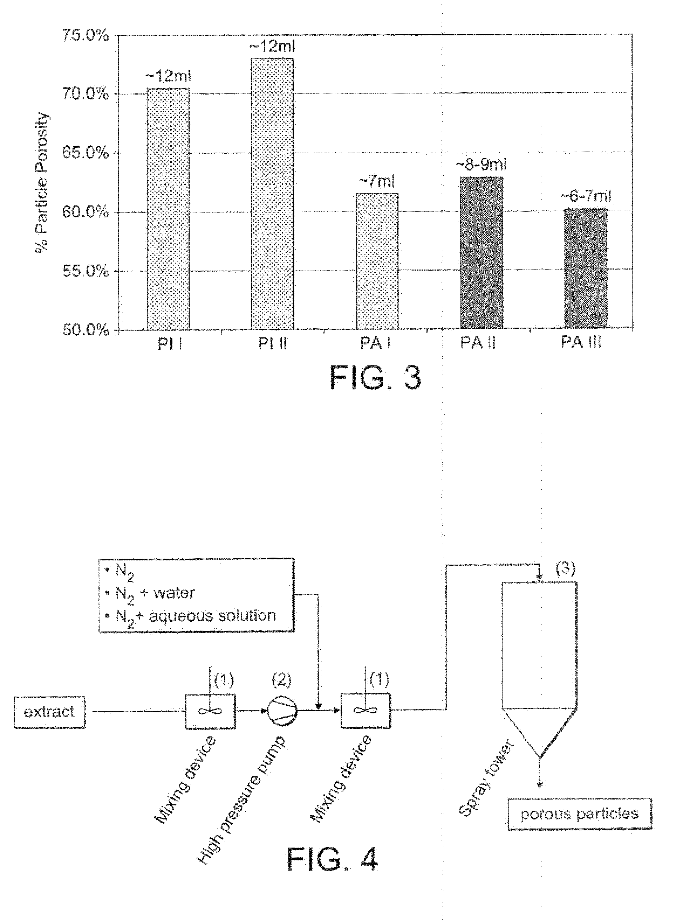

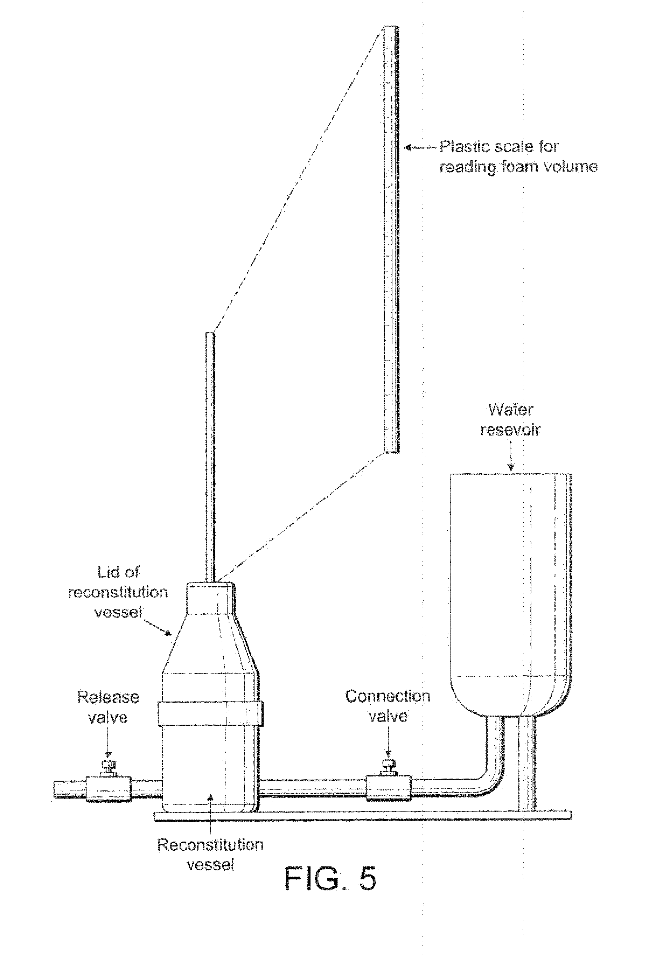

In a first aspect, it has been found that the increased porosity provides an instant beverage with an increased solubility and amount of crema. Fig. 3 shows that all prior art products (PA I, PA II and PA III) which have a lower porosity than the products of the invention (PI I and II) correspondingly produce a lower amount of crema. The amount of crema produced can measured with a simple device (Figure 5) consisting of a reconstitution vessel connected to a water reservoir, which is initially blocked off with a valve. After reconstituting the instant beverage in the vessel (5 g of powder with 200 ml of deionised water at 85°C for all results mentioned here), the reconstitution vessel is closed with a special lid that ends in a scaled capillary. The valve between the reconstitution vessel and the water reservoir is then opened and the water (standard tap water of any temperature) pushes the reconstituted beverage upwards into the capillary, thus facilitating the reading of the crema volume.

The prior art products were shown to produce about 6 to 9mL of crema according to this measurement method, while the product of the invention, upon reconstitution, produced over 10mL of crema.

It is also thought that a narrow size distribution of the pore size confers stability to the crema which is not observed in prior art products. More surprisingly, it has been found that a combination of the pore size as defined above, with a narrow size distribution and with a high porosity confers to the reconstituted product improved organoleptic properties in terms of texture of the foam, stability and amount.

Although it is not excluded by the present invention, the presence of creamer, lactic proteins, fat, stabilising salts etc. which has been used in many of the products of the prior art to provide a foamy product, is not necessary. A foamy drink may thus be obtained without the use of any additives, by simply modifying the above-mentioned parameters of the powder particles. In one embodiment a beverage powder of the invention comprises a creamer and/or a whitener.

The use of the powder of the invention for the preparation of an instant drink is thus provided. Preferably, the instant drink is coffee. The reconstitution of the powder of the invention in a liquid provides an instant drink having a crema of at least 10mL (when using 5 g of powder in 200 ml of water). This is a considerable improvement over known products as shown in Fig. 3.

A method to prepare the present instant drink powder is illustrated in Fig. 4. In a first step, an instant drink extract is subjected to high-pressure, typically 50 to 400 bar, preferably 150 to 350 bar. Prior and/or after the high-pressure pump (2), the extract may be mixed in a mixing device (1). The instant drink is thus conveyed to an atomisation nozzle (3) with a high-pressure pump (2). In a preferred embodiment, the extract is a coffee extract having a dry matter content of 35 to 70% at a temperature of 10 to 70°C, preferably 30 to 70°C. It may be advantageous to keep the oil content of the coffee extract low.

Gas is added to the pressurised extract, e.g. in one embodiment between the high-pressure pump (2) and the atomization nozzle (3). In another embodiment gas is added to the extract before the high pressure pump. Typically, the gas is selected from nitrogen, carbon dioxide, nitrous oxide or argon. Preferably it is nitrogen. The quantity of added gas is controlled in such a way that the entire gas is solubilised in the extract. The gas may be added with water or an aqueous solution. Thus, the water or aqueous solution may be saturated or oversaturated with said gas. In that case, the water or aqueous solution is added to the pressurised extract. The water or aqueous solution may further comprise aromas, foam enhancing, foam stabilising components etc. A static mixer or a rotating stirring/mixing device (1) can be used to ensure a constant concentration of the dissolved gas.

The pressurised extract is then sprayed at the atomisation nozzle (3). Due to the rapid pressure drop at the atomisation nozzle, the dissolved gas degasses and forms gas bubbles in the sprayed droplets. The tower temperature during spray drying may e.g. be between 70 and 115°C. The porous structure of the resulting instant drink powder is then solidified by heat (spray-drying).

An instant drink obtainable by the method described above also forms part of the present invention.

The present invention is further illustrated by the following non-limiting example.

## Examples

Instant drink powders of the invention were produced by:

- Extracting a 85 % Robusta blend of coffee with standard soluble coffee processing technology, then concentrating the extract to a solid matter content of 45 to 55 %.

- Heating the extract to a temperature between 50 and 60°C and pressurising it to between 130 and 160 bar at between 600 and 800 kg/h extract flow rate. Injecting 1-3 (e.g. 1.3 or 2.0) Nl/kg solids of Nitrogen into the pressurised extract at 150 bar leading to solubilisation of the Nitrogen.

- Spray-drying the extract at 70-90°C tower temperature.

## Mercury porosimeter to evaluated particle porosity

AutoPore IV 9520 was used for the structure evaluation (Micromeritics Inc. Norcrose, GA, USA). The operation pressure for Hg intrusion was from 0.4 psia to 90 psia (with low pressure from 0.4psia to 40psia and high pressure port from 20 to 90 pisa). The pore diameter under this pressure ranged from 500 to 2 um.

About 0.1 to 0.4 g of samples was precisely weighted and packed in a penetrometer (volume 3.5 ml, neck or capillary stem diameter 0.3 mm and stem volume of 0.5 ml).

After the penetrometer inserted to the lower pressure port, sample was evacuated at 1.1 psia/min, then switch to a medium rate at 0.5 pisa and a fast rate at 900 $\mu$m Hg. The Evacuating target is 60 $\mu$m Hg. After reaching the target, the evacuation was continued for 5 min before Hg was filled in.

The measurement was conducted in set-time equilibration. That, is, the pressure points at which data are to be taken and the elapsed time at that pressure in the set-time equilibration (10 sec) mode. Roughly 140 data points were collected at the pressure ranges.

The bulk volume of the sample is obtained from the initial volume of mercury and the sample holder. The volume of the inter particle voids is obtained after intrusion with mercury up to 2$\mu$m. Subtraction of the inter particle voids from the bulk volume of the sample gives the volume of the particles. The volume of the void space in the particle is obtained by subtracting the volume of the coffee matrix from the volume of the particles. The volume of the coffee matrix is obtained from the weight of the sample and coffee matrix density. The particle porosity is the ratio of voids volume in the particle to that of the volume of the particle.

**Determination of the internal structure of coffee particles by microcomputed X-ray tomography and 3D image analysis**

**Images acquisition**

X-ray tomography scans were performed with a 1172 Skyscan MCT (Antwerpen, Belgium) with a X-ray beam of 80KV and 100uA. Scans were performed with the Skyscan software (version 1.5 (build 0) A (Hamamatsu 10Mp camera), reconstruction with the Skyscan recon software (version 1.4.4).

Coffee particles were scanned in a polystyrene tube (1.6 mm diameter, 2 mm height, or a sticky tape (maximum 4mm diameter) was covered by a layer of coffee particles and scanned. For a pixel size of 1um, the camera was set up at 4000x2096 pixels and placed in the Far position. Exposure time was 2356 ms. Scan was performed over 180°, the rotation step was 0.3° and the frame averaging was 4.

The reconstruction of the dataset was performed over 400 slices in average, with the settings contrast at 0.008-0.22. Smoothing and ring artefact reduction were set up at 1 and 5, respectively.

**3D analysis of the images**

3D image analysis was performed on the 1 um per pixel datasets with CTAn software (version 1.7.0.3, 64-bit). The analysis was performed in two steps: (i) a first step to select the particles to be analysed by excluding the inter particles voids, (ii) the second step to obtain the distribution of the porosity of the particles. The particle porosity value obtained by this technique matches closely the mercury porosimetry.

(i) Selection of the particles, i.e. volume of interest:

The images of 1um per pixel resolution in grey levels (255 grey levels) were segmented at a grey level of 30, cleaned by removing any single spots smaller than 16 pixels, and then dilated by mathematical morphology (radius of 3 pixels). The selection of the volume of interest was performed through the shrink-wrap function, and then this volume was eroded by mathematical morphology (radius of 3 pixels) to adjust to the surface of the particles.

(ii) Void space distribution in the particles:

The images in grey levels were reloaded and segmented at a grey level of 40. The particles porosity was then calculated as the ratio of the volume of pores out of the particles volume, the particles volume being equal to the volume of interest defined above (i). The structure separation gave the particles pores size distribution.

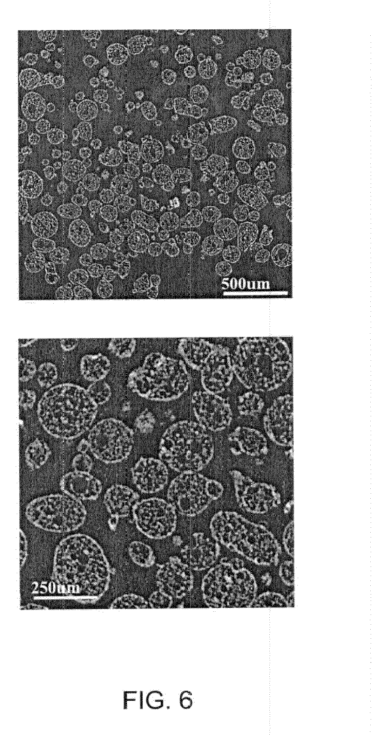

Beverage powders were produced by the method described above and characterised by the methods described above. The results are given in figures 1, 2 and 3, wherein PI I and PI II are beverage powders of the invention produced from coffee extract, and PA I, PA II and PA III, are beverage powders produced from coffee extract by prior art methods. PA II and PA III are commercial soluble coffee powders marketed as providing an espresso beverage with good crema. Figure 6 show typical examples of the structure of coffee beverage particles of the invention.

**Claims**

1. Instant drink powder comprising porous powder particles **characterised in that** the powder particles have a porosity of at least 55%, more preferably at least 65%, even more preferably at least 70%.

2. Powder according to claim 1, wherein the powder particles have pores having an average diameter $D_{50}$ less than 80 microns, preferably less than 60 microns, more preferably less than 40 microns. Most preferably, less than 25 microns.

3. Powder according to any of the preceding claims, wherein the pores have a size distribution **characterised by** a distribution span factor less than 4, preferably less than 3, more preferably less than 2, most preferably less than 1.5.

4. Powder according to any of the preceding claims, wherein the powder particle porosity is between 65 and 85%, more preferably between 65 and 80%, even more preferably between 65 and 75%, most preferably between 70 and 75%.

5. Powder according any of the preceding claims, wherein the powder particles have pores having an average diameter $D_{50}$ value of between 10 and 80 microns, preferably between 10 and 60 microns, more preferably between 10 and 40 microns, most preferably between 10 and 25 microns.

6. Powder according to any of the preceding claims, wherein the instant drink is coffee or a coffee/chicory mixture.

7. Powder according to any of the preceding claims further comprising a creamer and/or whitener.

8. Use of a powder according to any of claims 1 to 5, for the preparation of an instant drink.

9. Use according to claim 6, wherein the instant drink has a crema of at least 10 mL when using 5 g of powder in 200 ml of 85°C deionized water.

**10.** Use according to any of claims 6 or 7, wherein the instant drink is coffee.

**11.** Method for the manufacture of an instant drink powder comprising the steps of:

a. Subjecting a instant drink extract to a pressure of 50 to 400 bar, preferably 150 to 400 bar,
b. Adding gas to the pressurised extract, and
c. Spraying and drying the extract to form an instant drink powder.

**12.** Method according to claim 9, wherein the instant drink is coffee or a coffee/chicory mixture.

**13.** Method according to claims 9 or 10, wherein the gas is selected from nitrogen, carbon dioxide, nitrous oxide, preferably nitrogen.

**14.** Method according to any of claims 9 to 11, wherein the gas is added with water or an aqueous solution.

**15.** Method according to any of claims 9 to 12, wherein the water or aqueous solution comprises aromas, foam enhancing, foam stabilising components etc.

**16.** Method according to any of claims 9 to 13, wherein the water or aqueous solution is saturated or oversaturated with gas.

**17.** Method according to any of claims 9 to 14, wherein the drying is spray-drying.

**18.** Instant drink powder obtainable by a method according to any of claims 9 to 15.

FIG. 1

$$n = \frac{D_{90} - D_{10}}{D_{50}}$$

Span of distribution

FIG. 2

FIG. 3

FIG. 4

Plastic scale for reading foam volume

Water resevoir

Lid of reconstitution vessel

Release valve

Connection valve

Reconstitution vessel

FIG. 5

FIG. 6

**EUROPEAN SEARCH REPORT**

Europäisches
Patentamt
European
Patent Office
Office européen
des brevets

Application Number

EP 13 18 6814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 498 119 A (NESTLE SA) 18 January 1978 (1978-01-18) | 1-10 | INV. A23F5/36 |
| A | * page 1, line 88 - page 2, line 8; claim 2; figure 1 * | 11-18 | A23F5/34 |
| A,P | "Pumice Rocks", ANONYMOUS , 2008, XP002716445, Retrieved from the Internet: URL:http://www.pumicerocks.net/ [retrieved on 2008-12-10] * the whole document * | 1,4 | |
| A | CA 984 216 A (GEN FOODS GEN FOODS LTD) 24 February 1976 (1976-02-24) * page 4, line 14 - line 26 * | 1-18 | |
| X,D | EP 0 839 457 A (KRAFT FOODS INC [US]) 6 May 1998 (1998-05-06) | 11-18 | |
| A | * example 1 * | 1-10 | **TECHNICAL FIELDS SEARCHED (IPC)** |
| X | BELL R W ET AL: "Foam Spray Drying Methods of Making Readily Dispersible Nonfat Dry Milk", JOURNAL OF DAIRY SCIENCE, AMERICAN DAIRY SCIENCE ASSOCIATION, US, vol. 46, 1 January 1963 (1963-01-01), pages 1352-1356, XP009163680, ISSN: 0022-0302 * the whole document * | 1,8,11, 13,17,18 | A23F |
| X | US 3 185 580 A (HANRAHAN FRANCIS P ET AL) 25 May 1965 (1965-05-25) * example 1 * | 1,8,11, 13,17,18 | |

-/--

The present search report has been drawn up for all claims

| Place of search | Date of completion of the search | Examiner |
|---|---|---|
| The Hague | 18 December 2013 | Saunders, Thomas |

Europäisches
Patentamt

European
Patent Office

Office européen
des brevets

# EUROPEAN SEARCH REPORT

Application Number

EP 13 18 6814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 320 074 A (GEBHARDT HANS T)<br>16 May 1967 (1967-05-16)<br>* claim 1 * | 1,8,11,13,17,18 | |
| T | POWERPOINT PRESENTATION: FOAM SPRAY DRYING,<br>May 2003 (2003-05), XP002716451,<br>ACHEMA 2003, Frankfurt am Main, Germany<br>* the whole document * | | |
| A | ACHEMA 2003, CATALOGUE PART 1,<br>May 2003 (2003-05), pages 166-167,<br>XP002716447,<br>* the whole document * | 1-18 | |
| A | ACHEMA 2003, CATALOGUE PART 2,<br>May 2003 (2003-05), XP002716448,<br>* the whole document * | 1-18 | |
| A | BELLINGHAUSEN R ET AL: "Trockner",<br>CHEMIE INGENIEUR TECHNIK<br>,<br>vol. 75, no. 11<br>pages 1706-1714, XP002499629,<br>ISSN: 0009-286X, DOI:<br>10.1002/CITE.200390490<br>Retrieved from the Internet:<br>URL:http://www3.interscience.wiley.com/journal/106562643/abstract<br>[retrieved on 2008-10-13]<br>* the whole document * | 1-18 | TECHNICAL FIELDS SEARCHED (IPC) |
| A | US 3 749 378 A (RHODES D)<br>31 July 1973 (1973-07-31)<br>* figure 2; examples * | 1-18 | |

-/--

The present search report has been drawn up for all claims

| Place of search | Date of completion of the search | Examiner |
|---|---|---|
| The Hague | 18 December 2013 | Saunders, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 13 18 6814

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 97/33482 A (NESTLE SA [CH]) 18 September 1997 (1997-09-18) * example 3 * | 1-18 | |
| A | WO 02/062152 A (NESTLE SA [CH]; DARBYSHIRE JOHN [CH]; CHMIEL OLIVER [CH]; UBBINK JOHAN) 15 August 2002 (2002-08-15) * example 3 * | 1-18 | |

TECHNICAL FIELDS
SEARCHED (IPC)

The present search report has been drawn up for all claims

| Place of search | Date of completion of the search | Examiner |
|---|---|---|
| The Hague | 18 December 2013 | Saunders, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**  EP 13 18 6814

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2013

| Patent document cited in search report | | Publication date | Patent family member(s) | | Publication date |
|---|---|---|---|---|---|
| GB 1498119 | A | 18-01-1978 | AT | 347765 B | 10-01-1979 |
| | | | AU | 500433 B2 | 24-05-1979 |
| | | | AU | 8701175 A | 23-06-1977 |
| | | | BE | 835557 A1 | 13-05-1976 |
| | | | CA | 1025273 A1 | 31-01-1978 |
| | | | CH | 604551 A5 | 15-09-1978 |
| | | | DE | 2549440 A1 | 24-06-1976 |
| | | | ES | 443509 A1 | 16-03-1978 |
| | | | FR | 2294652 A1 | 16-07-1976 |
| | | | GB | 1498119 A | 18-01-1978 |
| | | | IN | 142897 A1 | 03-09-1977 |
| | | | IT | 1048739 B | 20-12-1980 |
| | | | JP | S546628 B2 | 30-03-1979 |
| | | | JP | S5186169 A | 28-07-1976 |
| | | | NL | 7514088 A | 21-06-1976 |
| | | | NZ | 179380 A | 02-06-1978 |
| | | | OA | 5174 A | 31-01-1981 |
| | | | ZA | 7507413 A | 24-11-1976 |
| CA 984216 | A | 24-02-1976 | | | |
| EP 0839457 | A | 06-05-1998 | AR | 009395 A1 | 12-04-2000 |
| | | | AT | 206286 T | 15-10-2001 |
| | | | CA | 2216852 A1 | 30-04-1998 |
| | | | DE | 69707079 D1 | 08-11-2001 |
| | | | DE | 69707079 T2 | 20-06-2002 |
| | | | DK | 0839457 T3 | 19-11-2001 |
| | | | EP | 0839457 A1 | 06-05-1998 |
| | | | ES | 2167664 T3 | 16-05-2002 |
| | | | JP | 4596573 B2 | 08-12-2010 |
| | | | JP | H10150915 A | 09-06-1998 |
| | | | PT | 839457 E | 28-03-2002 |
| | | | US | 5882717 A | 16-03-1999 |
| US 3185580 | A | 25-05-1965 | GB | 1055424 A | 18-01-1967 |
| | | | US | 3185580 A | 25-05-1965 |
| US 3320074 | A | 16-05-1967 | NONE | | |
| US 3749378 | A | 31-07-1973 | NONE | | |
| WO 9733482 | A | 18-09-1997 | AT | 206287 T | 15-10-2001 |
| | | | AU | 2095397 A | 01-10-1997 |
| | | | CA | 2248542 A1 | 18-09-1997 |
| | | | DE | 19623296 A1 | 18-09-1997 |
| | | | DE | 69707113 D1 | 08-11-2001 |
| | | | DE | 69707113 T2 | 07-03-2002 |

For more details about this annex : see Official Journal of the European Patent Office, No. 12/82

**ANNEX TO THE EUROPEAN SEARCH REPORT
ON EUROPEAN PATENT APPLICATION NO.**

EP 13 18 6814

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2013

| Patent document cited in search report | | Publication date | Patent family member(s) | | Publication date |
|---|---|---|---|---|---|
| | | | DK | 0888066 T3 | 21-01-2002 |
| | | | EP | 0888066 A1 | 07-01-1999 |
| | | | ES | 2163126 T3 | 16-01-2002 |
| | | | GB | 2301015 A | 27-11-1996 |
| | | | JP | 3682301 B2 | 10-08-2005 |
| | | | JP | 2000506022 A | 23-05-2000 |
| | | | PT | 888066 E | 28-02-2002 |
| | | | US | 5882716 A | 16-03-1999 |
| | | | WO | 9733482 A1 | 18-09-1997 |
| | | | ZA | 9701954 A | 07-09-1998 |
| WO 02062152 | A | 15-08-2002 | BR | 0206916 A | 03-02-2004 |
| | | | CA | 2436010 A1 | 15-08-2002 |
| | | | CN | 1489438 A | 14-04-2004 |
| | | | EP | 1359810 A1 | 12-11-2003 |
| | | | HU | 0302536 A2 | 28-11-2003 |
| | | | MX | PA03006788 A | 13-11-2003 |
| | | | MY | 128836 A | 28-02-2007 |
| | | | PL | 367288 A1 | 21-02-2005 |
| | | | RU | 2283091 C2 | 10-09-2006 |
| | | | US | 2003026836 A1 | 06-02-2003 |
| | | | WO | 02062152 A1 | 15-08-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9733482 A
- EP 0154192 B2
- GB 2154422 A
- US 4438147 A
- EP 1627572 A
- EP 1627568 A
- US 6964789 B
- US 5882717 A
- EP 0839457 A